# EUROPEAN PATENT SPECIFICATION

(11) **EP 2 231 341 B1**
(45) Date of publication and mention of the grant of the patent: **26.12.2018**
(21) Application number: 08720183.6
(22) Date of filing: 08.01.2008
(51) Int. Cl.: F16D 65/00, F16D 65/12, B05B 14/00, B05D 7/22, B05D 1/02

(54) **METHOD AND APPARATUS FOR COATING THE VENTILATION CHAMBER OF ROTORS FOR DISC BRAKES WITH A PROTECTIVE LAYER**
VERFAHREN UND VORRICHTUNG ZUM BESCHICHTEN DER LÜFTUNGSKAMMER VON ROTOREN FÜR SCHEIBENBREMSEN MIT EINER SCHUTZSCHICHT
PROCEDE ET APPAREIL SERVANT A REVETIR LA CHAMBRE DE VENTILATION DE ROTORS POUR FREINS A DISQUE AU MOYEN D'UNE COUCHE DE PROTECTION

(43) Date of publication of application: 29.09.2010
(73) Proprietor: Freni Brembo S.p.A., 24035 Curno (IT)
(72) Inventor: MARCHESI, Marco, I-24035 Curno (IT); SCHMITZ, Tobias, I-24035 Curno (IT)
(74) Representative: Crippa, Paolo Ernesto
(86) International application number: PCT/IT2008/000013
(87) International publication number: WO 2009/087694

(56) References cited:
- US-A- 3 247 004
- US-A- 3 896 760
- US-A- 5 686 144
- US-A- 6 136 374

## Description

The present invention relates to apparatus, system, and method for coating the ventilation chamber of rotors for disc brakes with a protective layer.

Particularly, the present invention relates to an apparatus intended for application in the automotive field; the apparatus finds application, specifically as a function of the ability of braking rotors specifically braking bands for disc brake discs, or brake discs, to resist the oxidation produced by a saline mist chamber.

Generally, brake discs have been painted with manual or automatic spraying guns using equipment which mix the paint to be sprayed on the rotor under low pressure air in order to achieve a substantial atomization and distribution on the surface thereof.

In US 6,136,374 and US 6,436,189 a method and an apparatus is described for applying a protective layer to the ventilation surfaces in a brake rotor.

Particularly, in the method provided in these documents, the steps are described of:
1- Rotating the rotor;
2- Spraying and directing the coating material layer with an air stream towards the ventilation chamber ducts;
3- Suction-applying means on the side opposite the one which the paint spray and air flow are directed to, in axis therebetween;
4- End baking the coating material.

Even though essentially satisfactory under many points of view, prior art apparatuses have not demonstrated to be able to evenly apply a protective layer, and entirely apply the latter inside the ventilation chamber of a ventilated braking band featuring coarse surfaces.

To the purpose of eliminating the limitations and drawbacks of the conventional painting methods for brake discs, a painting process is proposed which allows a practical use, that can achieve quality results through a use which is efficient and reliable over time, and which allows the total fulfilment of the standards required, for example, by the ASTM B117 regulation.

In these circumstances, the problem underlying the present invention is to overcome the drawbacks of the state of the art by providing an apparatus and a system which are capable of solving the drawbacks of the prior art.

Further task of the present invention is also a method that is capable of solving the drawbacks of the prior art.

These and other objects are achieved by an apparatus according to claim 1, by a system according to claim 10, and by a method according to claim 12.

The apparatus provided herein allows coating, for example, with an anticorrosive liquid which is specifically developed for brake discs, all the ventilation ducts which not only are directed in the radial direction, but also ducts or portions thereof which make up the disc ventilation chamber and which are arranged essentially transversally to said radial direction in a complete and even manner. This is achieved without using protection masks for the application of the liquid and without dipping the disc or band in said liquid.

Thereby, the absence of oxidation is also ensured after at least 120-hour exposure to the saline chamber as provided for in ASTM B117 standard.

These and other objects are achieved by the claims cited herein below, and further embodiments can be related to the annexed dependant claims, which are given herein below by way of example.

The technical features of the invention, according to the above-mentioned objects, can be found in the content of the above-mentioned claims, and the advantages thereof will be more clear from the following detailed description, given with reference to the annexed drawings, which represent a merely exemplary, non-limiting embodiment thereof, in which:

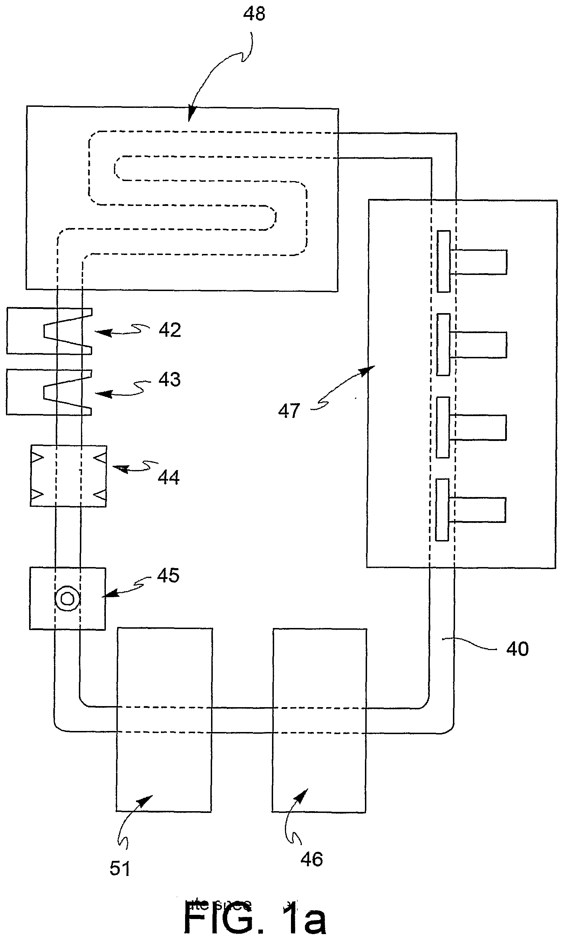

- Fig. 1a shows a plan, schematic view of a system for coating rotors for disc brakes with a protective layer;

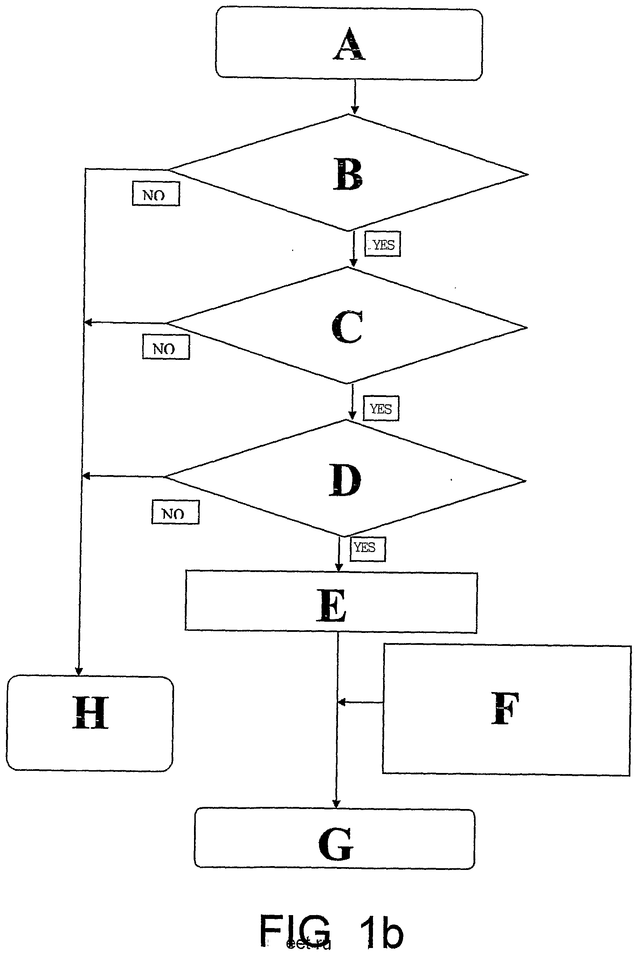

- Fig. 1b illustrates by means of a block diagram a possible operational logic for the system of Fig. 1a;

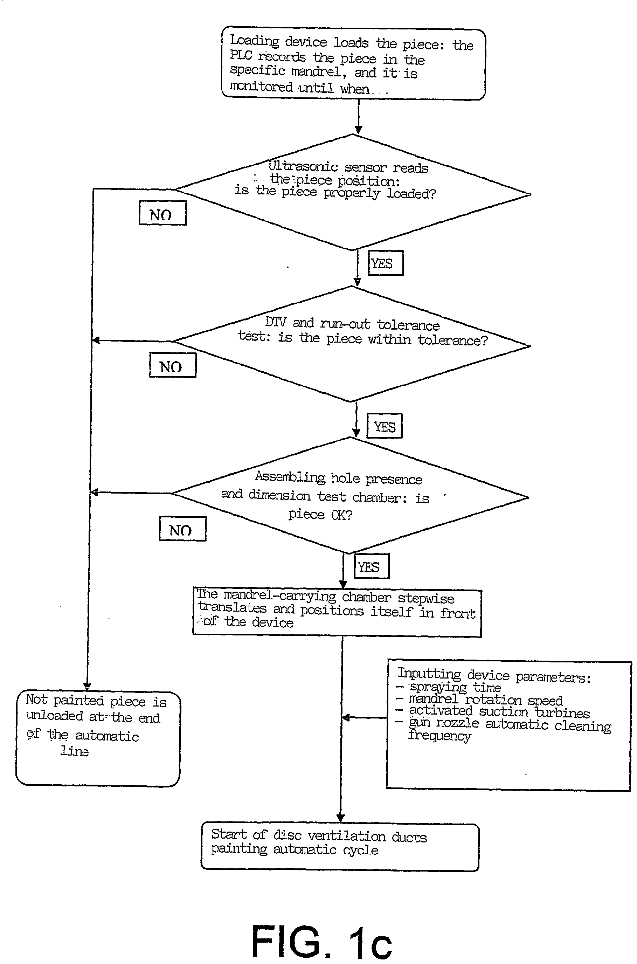

- Fig. 1c illustrates the block diagram of Fig. 1b provided with captions;

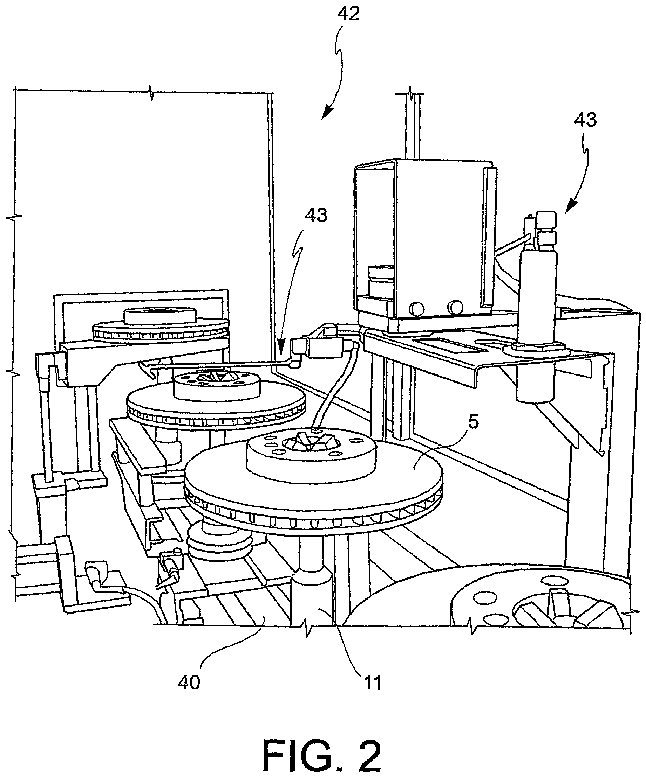

- Fig. 2 shows a perspective view of a loading station for brake discs and the control of the proper loading on the handling line of the Fig. 1 system;

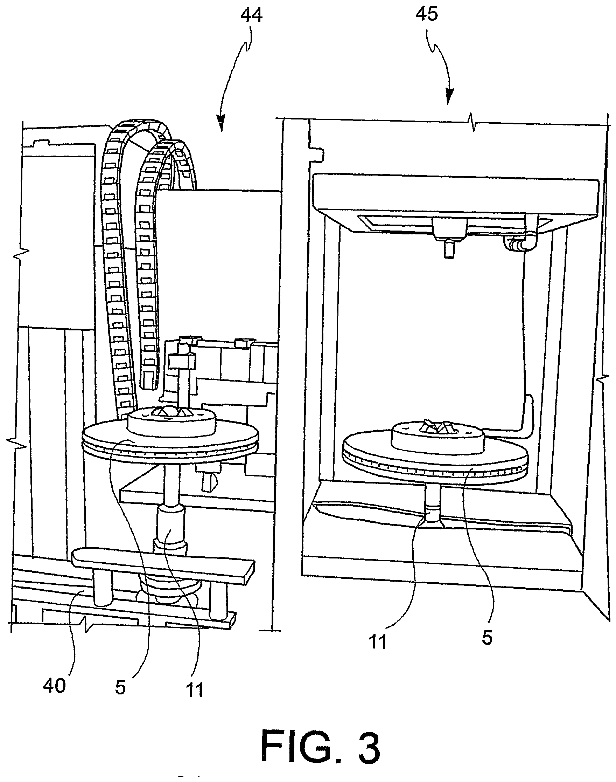

- Fig. 3 shows a perspective view of a constructive tolerance control station of the disc for disk brake and the presence and dimensions of the disc assembling holes on a vehicle;

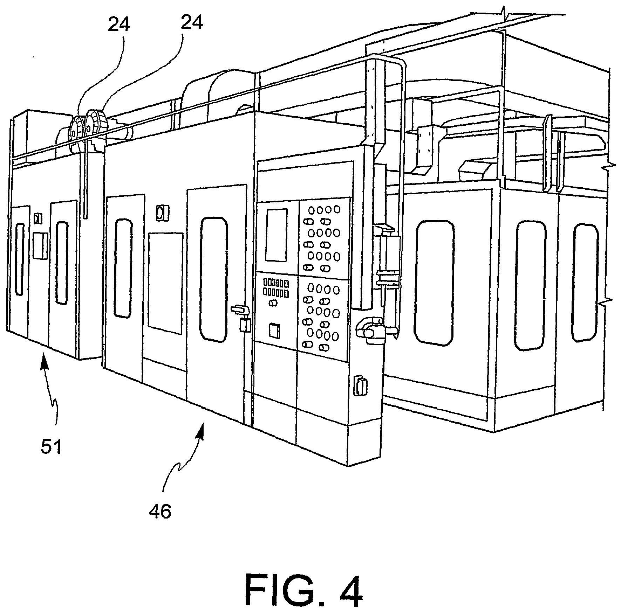

- Fig. 4 illustrates a perspective view of two protective layer-applying stations, a first one to the braking band ventilation chamber, and a second one to the remaining surfaces of the braking band or the whole disc;

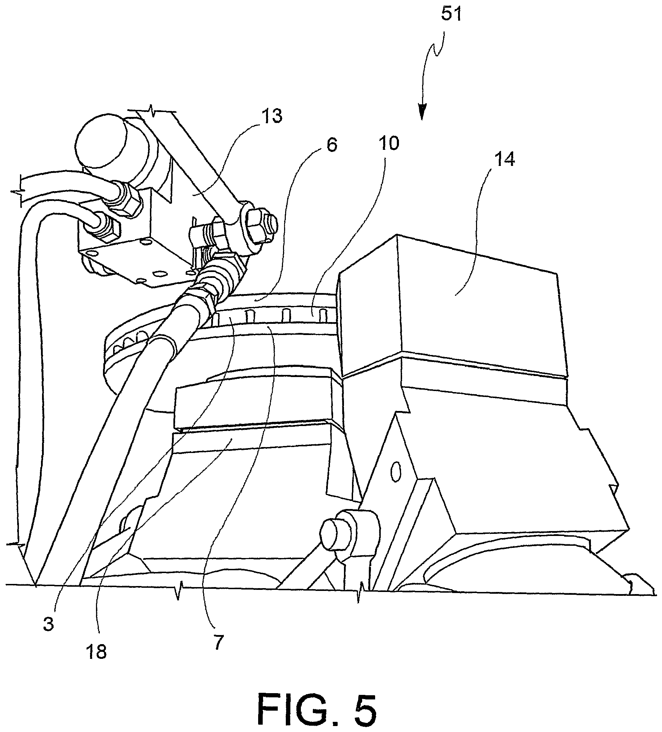

- Fig. 5 illustrates a side perspective view of a first embodiment of an apparatus for applying a protective layer to the surfaces of a braking band ventilation chamber to which a disc for disk brake is mounted;

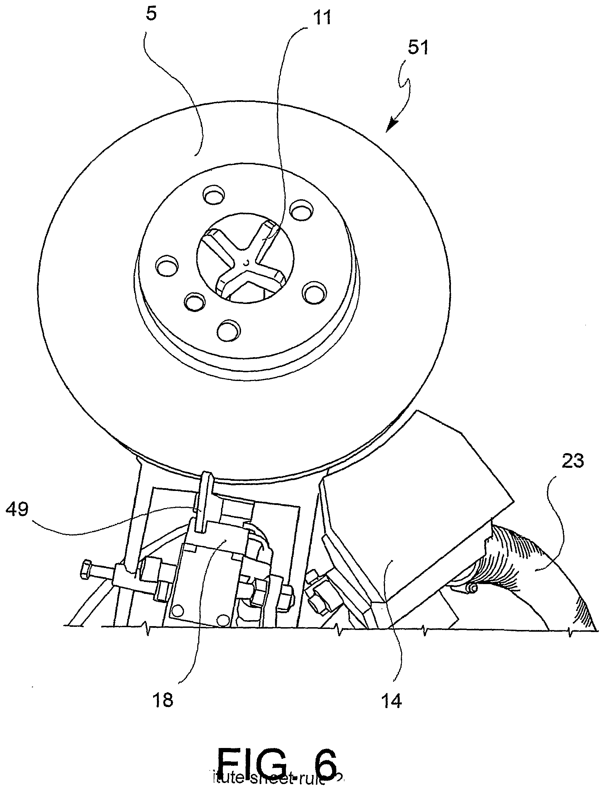

- Fig. 6 illustrates a top perspective view of the apparatus for applying a protective layer to the surfaces of a braking band ventilation chamber to which a disc for disk brake is mounted according to Fig. 5;

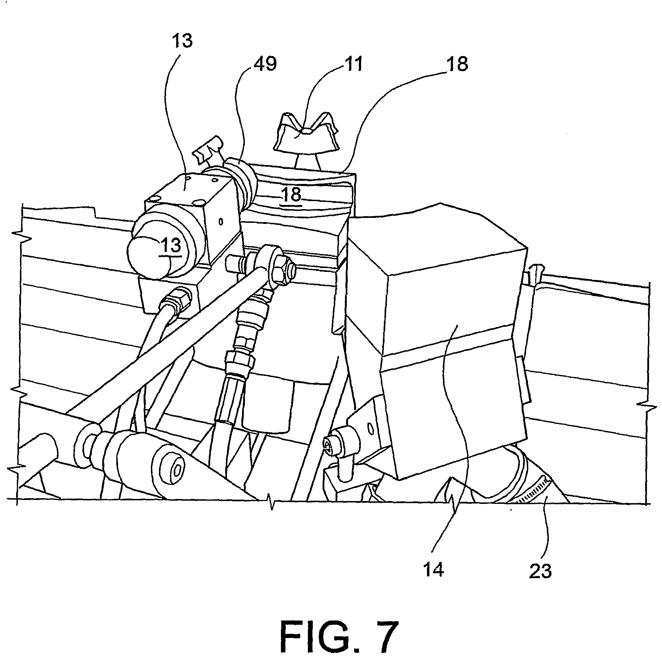

- Fig. 7 illustrates a side perspective view of the apparatus for applying a protective layer to the surfaces of a braking band ventilation chamber without the disc for disk brake;

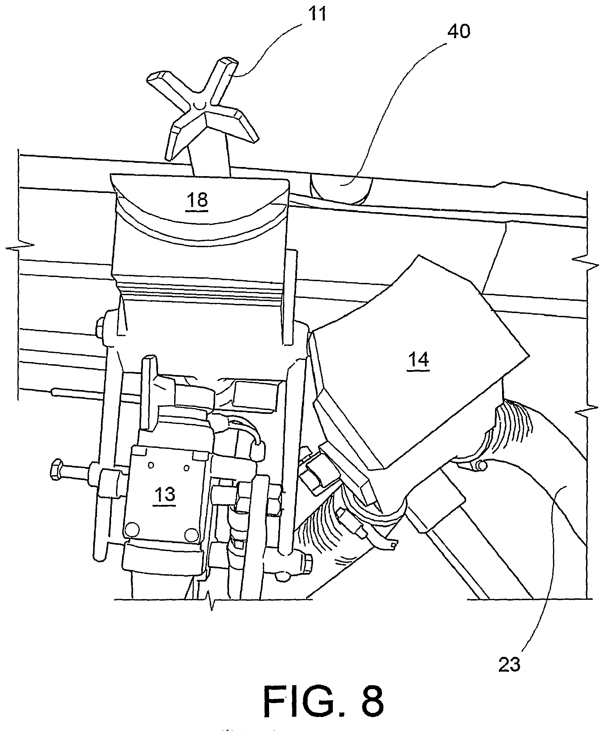

- Fig. 8 illustrates a top perspective view of the apparatus for applying a protective layer to the surfaces of a braking band ventilation chamber without the disc for disk brake;

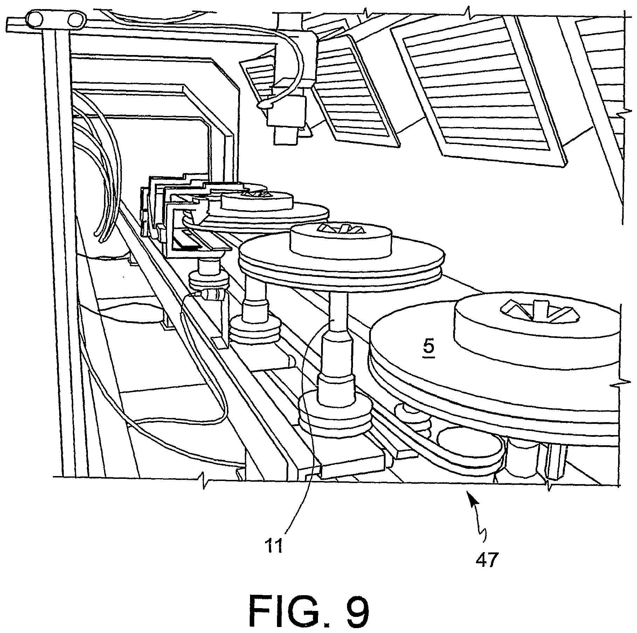

- Fig. 9 illustrates a perspective view of a baking or polymerization station for the protective layer;

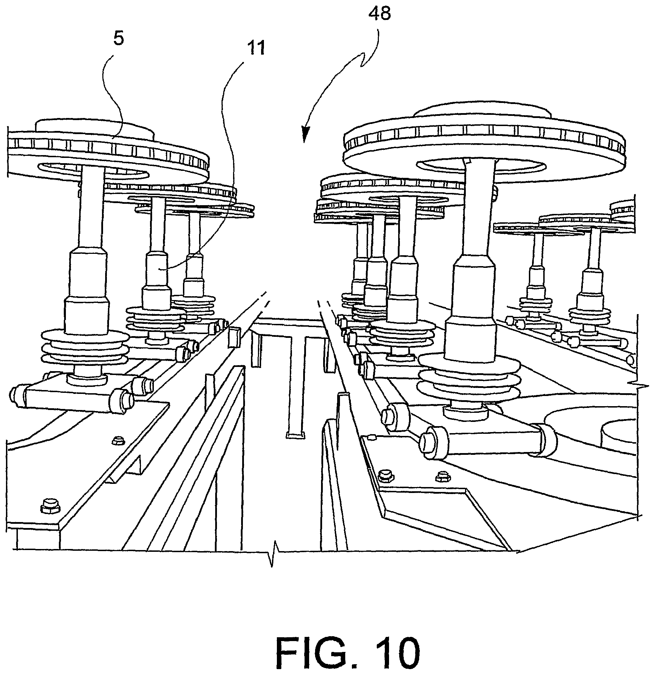

- Fig. 10 illustrates a perspective view of a cooling station for the discs following the baking or polymerization of the protective layer;

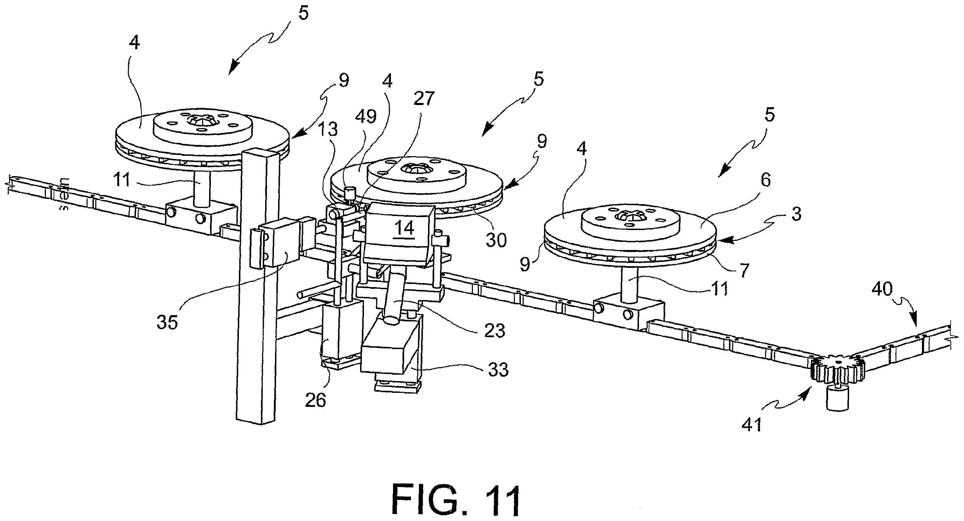

- Fig. 11 illustrates an axonometric view of a detail of an apparatus for applying a protective layer to the surfaces of a braking band ventilation chamber, and of the handling line of the pieces to be treated;

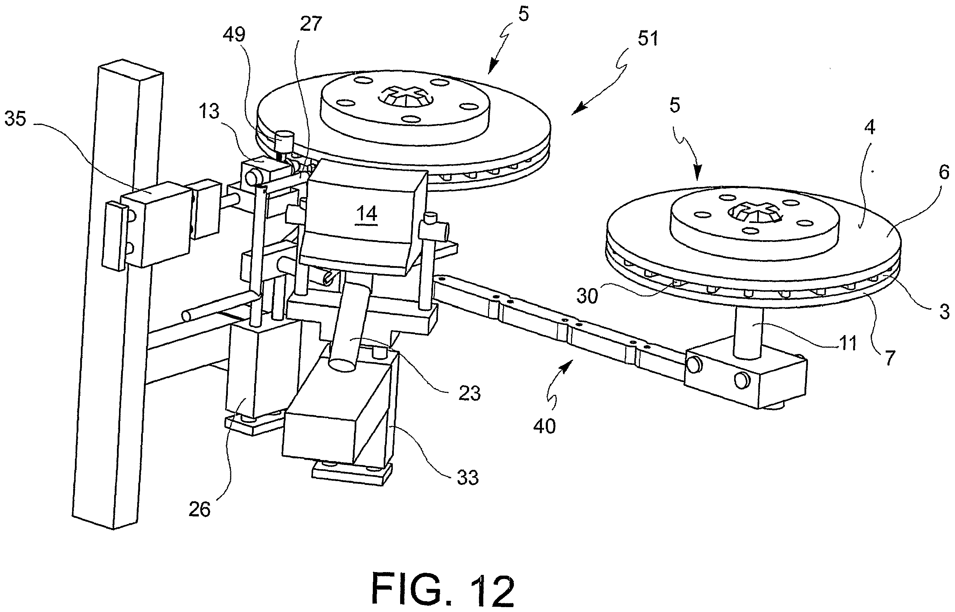

- Fig. 12 illustrates an axonometric view of an enlarged detail of Fig. 11;

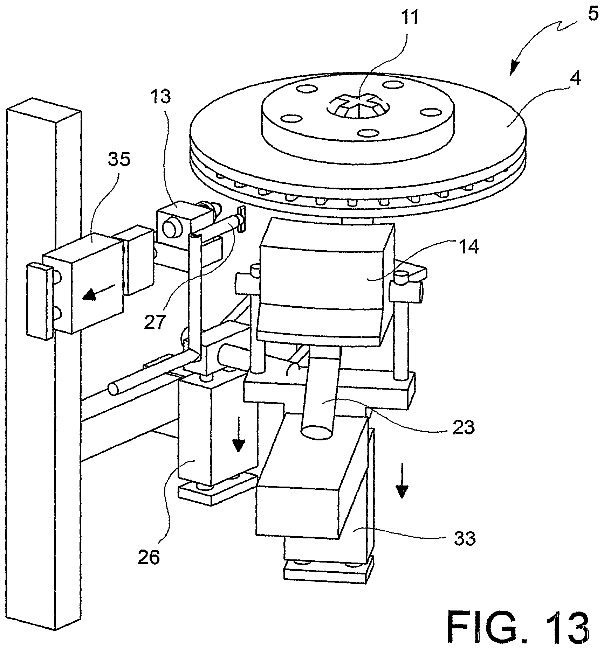

- Fig. 13 illustrates a front axonometric view of an apparatus for applying a protective layer to the surfaces of a braking band ventilation chamber with a disc for disk brake and in a rest or progress position of the piece to be treated;

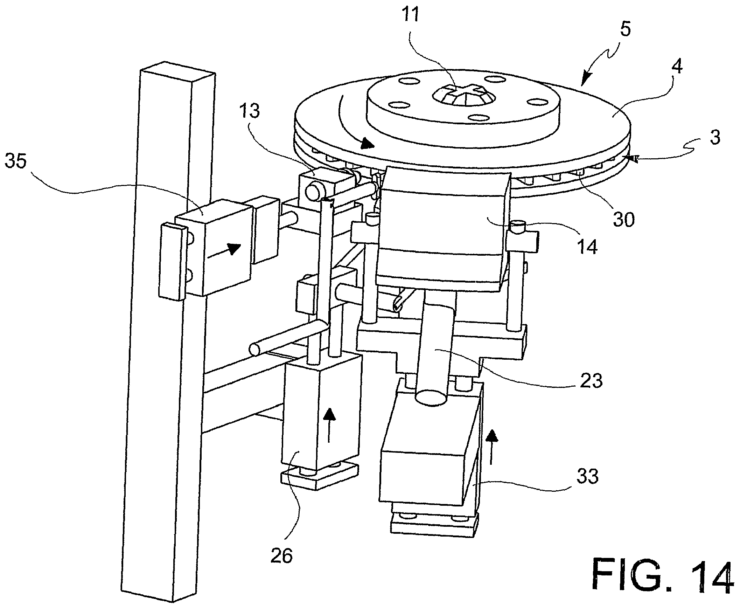

- Fig. 14 illustrates a front axonometric view of the apparatus for applying a protective layer to the surfaces of a braking band ventilation chamber with the disc for disk brake of Fig. 13 in an operative position;

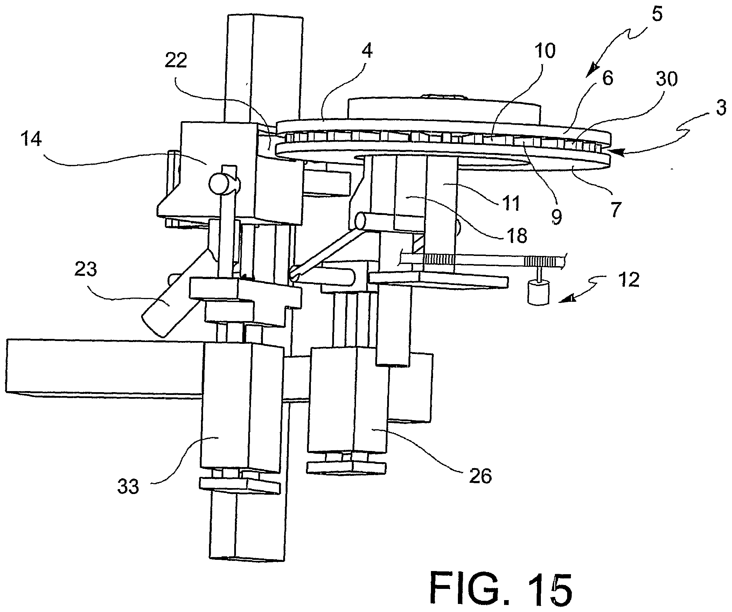

- Fig. 15 illustrates a rear axonometric view of the apparatus of Fig. 14;

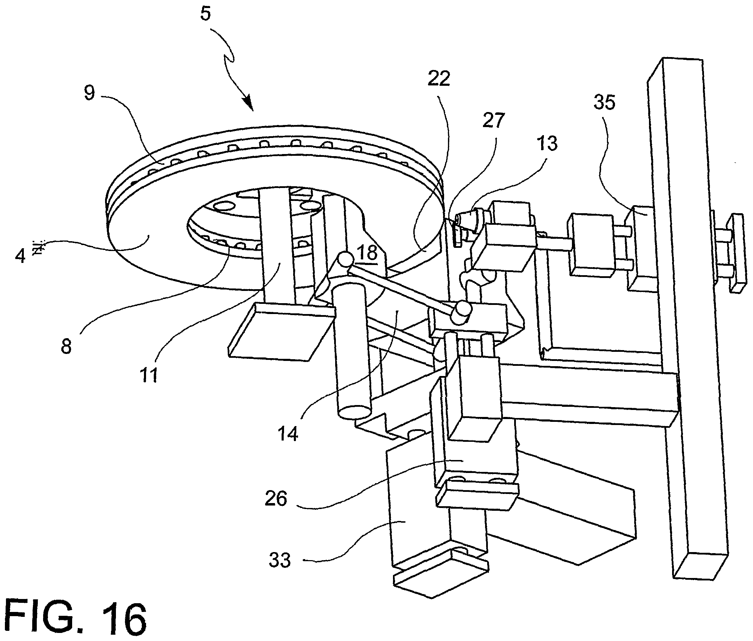

- Fig. 16 illustrates a lower axonometric view of the apparatus of Fig. 14;

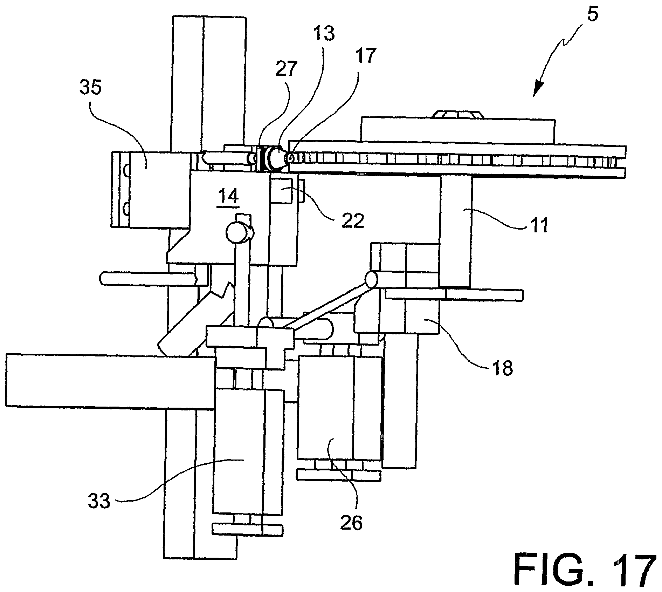

- Fig. 17 illustrates a rear axonometric view of the apparatus of Fig. 13;

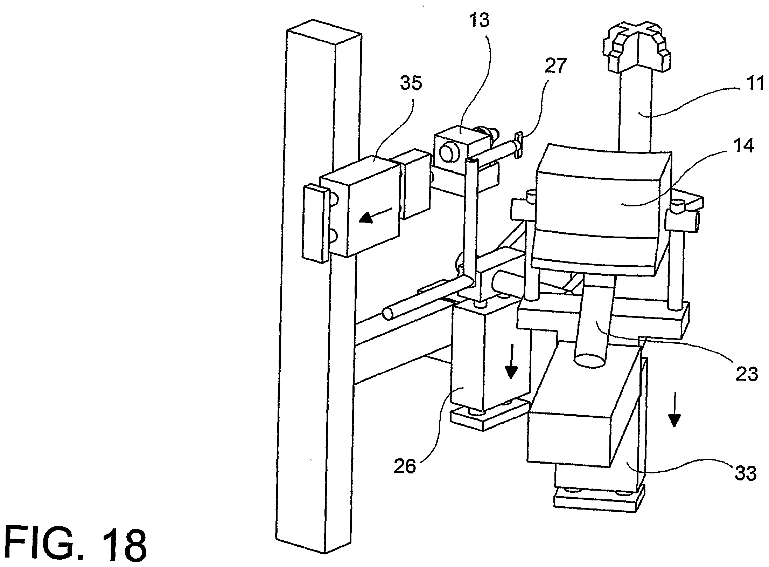

- Fig. 18 illustrates a front axonometric view of an apparatus for applying a protective layer to the surfaces of a braking band ventilation chamber without disc for disk brake, and in a rest or progress position of the piece to be treated;

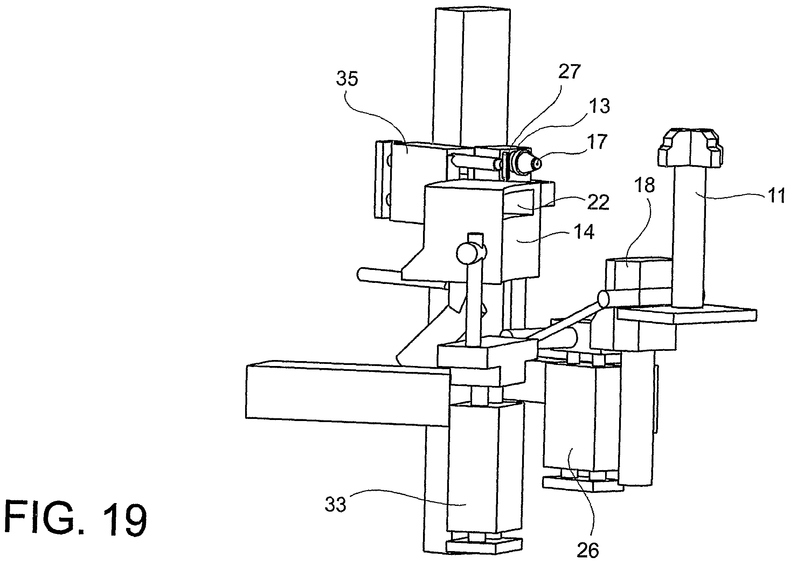

- Fig. 19 illustrates a rear axonometric view of the apparatus of Fig. 18;

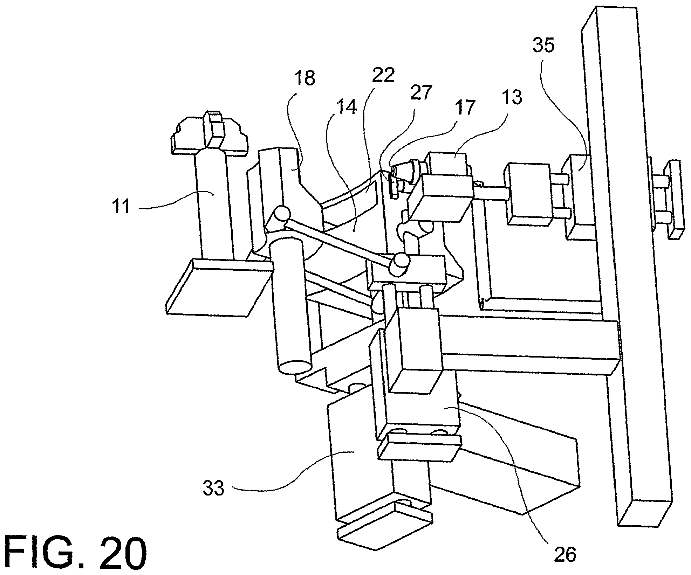

- Fig. 20 illustrates a lower axonometric view of the apparatus of Fig. 18;

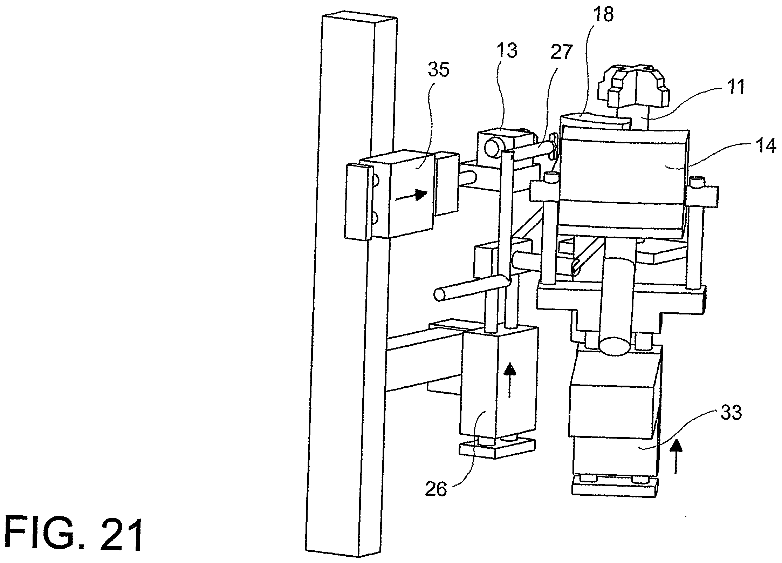

- Fig. 21 illustrates a front axonometric view of the apparatus for applying a protective layer to the surfaces of a braking band ventilation chamber without the disc for disk brake in an operative position;

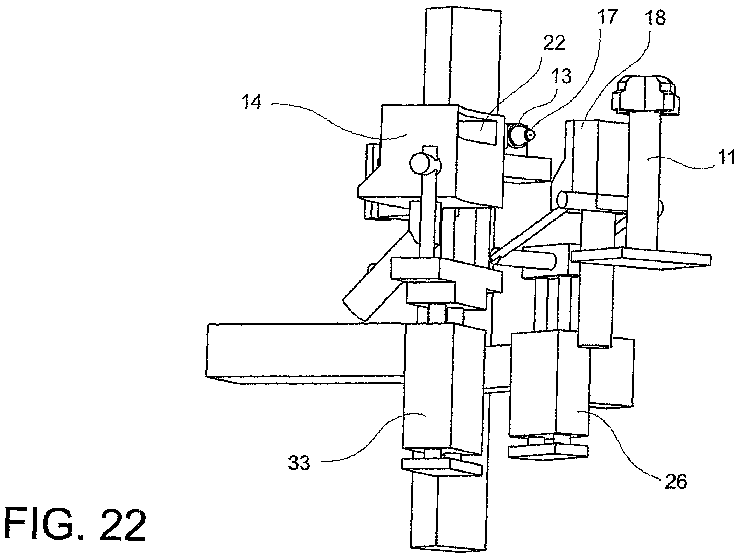

- Fig. 22 illustrates a rear axonometric view of the apparatus of Fig. 21;

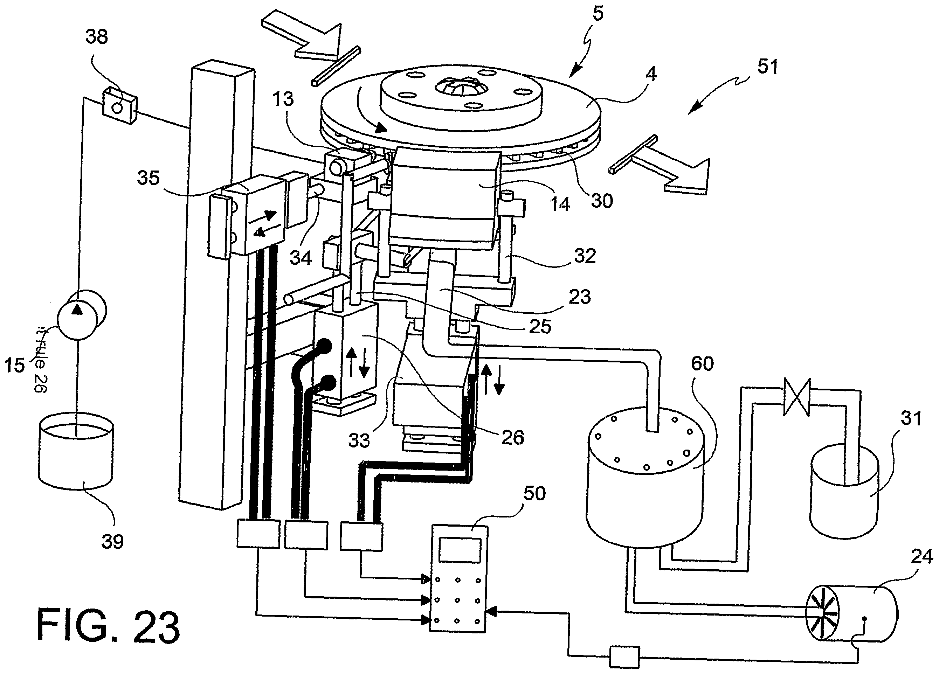

- Fig. 23 illustrates axonometric and schematic views of an apparatus for applying a protective layer to the surfaces of a braking band ventilation chamber with a disc for disk brake operatively connected to the operation and feeding and evacuation devices;

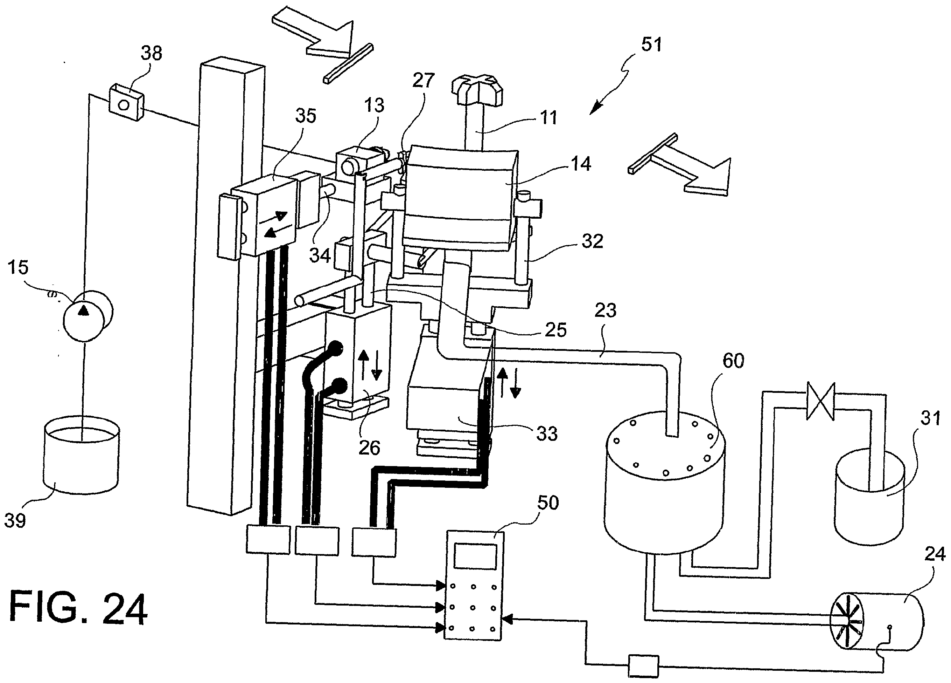

- Fig. 24 illustrates axonometric and schematic views of an apparatus for applying a protective layer to the surfaces of a braking band ventilation chamber without disc for disk brake that is operatively connected to the operation and feeding and evacuation devices;

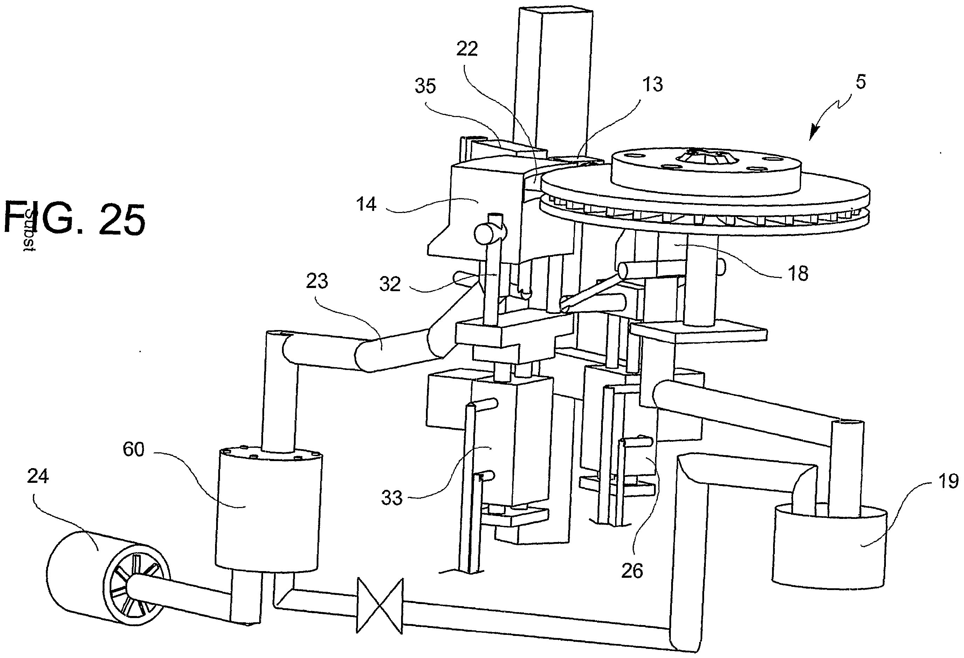

- Fig. 25 illustrates a rear axonometric and schematic view of the apparatus of Fig. 23;

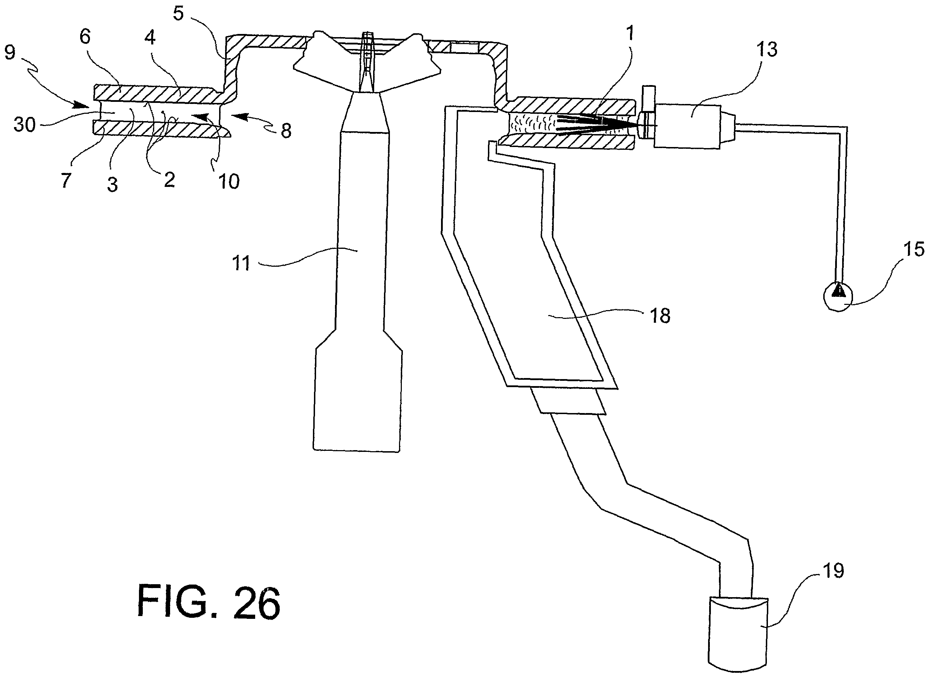

- Fig. 26 illustrates a schematic section of a detail of the apparatus for applying a protective layer to the surfaces of a braking band ventilation chamber, in accordance with an embodiment;

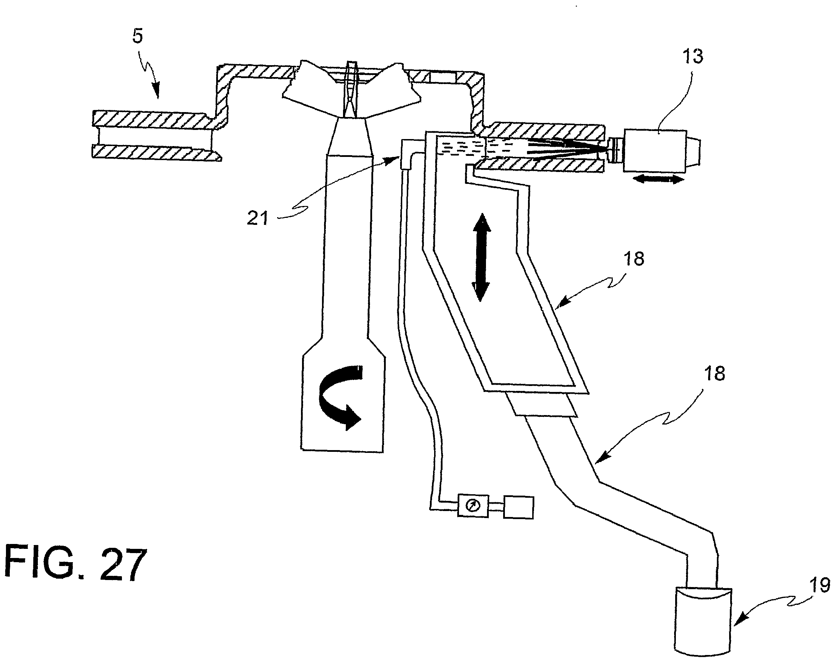

- Fig. 27 illustrates a schematic section of a detail of the apparatus for applying a protective layer to the surfaces of a braking band ventilation chamber, in accordance with a further embodiment.

In accordance with a general embodiment, an apparatus for applying a corrosion protecting layer 1, which layer is initially in a liquid form, to the surfaces 2 of a ventilation chamber 3 of a braking band 4 of disk brake disc 5 is described.

Said braking band 4 comprises two annular plates 6, 7 having a same predefined rotation axis X-X.

Said plates 6, 7 face each other and define the ventilation chamber 3 therebetween. Said chamber comprises ventilation chamber surfaces 2 and an inner annular air inlet edge opening 8 facing the rotation axis X-X, and an outer annular air outlet edge opening 9 opposite the air inlet edge opening in the transversal or radial direction relative to the rotation axis X-X.

Said plates 6, 7 are connected to each other by a plurality of connection members 30 defining ventilation ducts 10 arranged inside said ventilation chamber and defining said ventilation chamber surface 2. In accordance with a particular embodiment, said ventilation ducts are radially arranged relative to said braking band rotor.

Said apparatus comprises:
- supporting means 11 of the braking band 4 for rotating the latter around said axis X-X;
- rotating means 12 of said supporting means 11;
- means to direct the corrosion protecting liquid 13 through said air outlet edge opening 9 or said air inlet edge opening 8 towards said ventilation chamber.

Advantageously, said means to direct a corrosion protecting liquid 13 into the ventilation chamber 3 comprise means for applying a predefined or preset pressure 15 to said liquid, while avoiding admixing the latter with air before it has flown out of said liquid-directing means in the ventilation chamber and spilling means 16 of said pressurized liquid comprising a liquid outflow opening 17 having preset small dimensions which is able to result in a separation of said liquid particles, thus resulting in the atomization thereof.

With further advantage, suction-applying means 14 are provided.

Preferably, said suction-applying means 14 are so arranged as to act through the same edge opening 9 or 8 which said means act on in order to direct the corrosion protecting liquid towards the ventilation chamber.

Advantageously, in accordance with an embodiment, protective liquid passive collection means 18 which are arranged proximate to the air inlet 8 or air outlet 9 opening which is opposite said protective liquid-directing means 13 to the ventilation chamber are further provided.

In accordance with an embodiment, said protective liquid passive collection means 18 are arranged opposite said protective liquid-directing means 13 to the ventilation chamber 3.

In accordance with an embodiment, said passive collection means 18 comprise a collection port which faces said air inlet 8 or air outlet 9 opening which is opposite said protective liquid-directing means 13, so as to collect any liquid flowing out of said ventilation chamber 3 and convey it by gravity towards a collection tank 19 for the protective liquid 1.

In accordance with an embodiment, said collection port has an extension covering a predefined circumferential portion of said facing air inlet 8 or air outlet 9 opening which is opposite said protective liquid 13 directing means so as to collect any protective liquid 13 flowing out from said opening.

Advantageously, in accordance with an embodiment, said passive collection port is in the form of a circular sector plan with circumferential opening facing the ventilation chamber and transversal evacuation duct for the collected liquid, in order to take a compact size and to be easily automatically insertable, for example, inside the disc.

In accordance with an embodiment, said collection port is arranged within a few millimetres of the band edge, for example, within 1 to 3 mm.

In accordance with an embodiment, the protective liquid passive collection means 18 are supported by movable supporting means 25 which allow putting said protective liquid passive collection means 18 to face said ventilation chamber opening and bringing them to a disengagement position, thus allowing said band supporting means 11 to move away from said protective liquid-directing means 13.

In accordance with an embodiment, said movable supporting means 25 are adapted to position said passive collection means 18 relative to said braking band 4, for example, in order to allow arranging the port in axis with the ventilation ducts or, alternatively, slanting relative to these.

In accordance with an embodiment, said movable supporting means 25 are operatively moved through driving means 26, for example, pneumatic pistons which act on the movable support which slides on guides secured to the apparatus fixed structure, or frame.

In accordance with an embodiment, said driving means are operated in a controlled manner.

In accordance with an embodiment, means for applying at least one air jet 20 through said air inlet 8 or air outlet 9 opening are further provided.

In accordance with an embodiment, said means for applying at least one air jet 20 are air jets 27 arranged adjacent to said liquid-directing means and face said air inlet 8 or air outlet 9 opening to which said protective liquid-directing means 13 are faced, so as to promote the fluid flow inside the ventilation ducts 10.

In accordance with an embodiment, said means for applying at least one air jet 20 are facing said air inlet 8 or air outlet 9 opening which is opposite said protective liquid-directing means 13, so as to counter-act the liquid outflowing from the ventilation chamber 3 and increase the flow turbulence of said liquid in the ventilation chamber 3.

In accordance with an embodiment, said means for applying at least one air jet 20 comprise at least two nozzles 21 adapted to generate at least two air jets entering said ventilation chamber 3 angularly relative to said axis (X-X) before and after the counter-posed arrangement of the liquid-directing means to the chamber 13.

Thanks to this arrangement, it is possible to obtain an air flow preceding the liquid feeding or directing means to the ventilation chamber, and to generate an air movement within the ventilation chamber before the liquid flows therein.

In accordance with an embodiment, the air jets eject predefined pressurized air, for example, from 1 to 4 bars and, preferably, at 3 bars. Advantageously, said pressure is operated in a controlled manner and/or with an adjustable direction.

In accordance with an embodiment, the means for applying at least one air jet 20, are supported by movable air jet supporting means 28 which cause said means for applying at least one air jet 20, 21 to face said ventilation chamber opening and bring them to a disengagement position which allows said band supporting means 11 to move away from said protective liquid-directing means 13.

In accordance with an embodiment, said movable air jet supporting means 28 are adapted to orientate said means for applying at least one air jet 20, 21 relative to said braking band 4, for example in an operable manner, preferably in a controlled manner.

In accordance with an embodiment, said movable air jet supporting means 28 are operatively moved through driving means of the air jets 29.

In accordance with an embodiment, said driving means are operated in a controlled manner.

In accordance with an embodiment, said suction-applying means 14 comprise a suction port 22 extending as to be face said ventilation chamber opening 3 angularly arranged adjacent to said liquid-directing means 13 to said ventilation chamber.

In accordance with an embodiment, said suction port 22 is fluidically connected to at least one suction turbine 24, for example, through at least one duct 23.

In accordance with an embodiment, interposed between said suction port 22 and said turbine 24, a separation device 60 for the liquid which is sucked by said suction port from air is provided, which comprises a liquid collection portion connected to a liquid collection tank 31.

In accordance with an embodiment, the suction of said suction means is activated in a controlled manner.

In accordance with an embodiment, said suction means 14 are activated before the liquid-directing means 13 to said ventilation chamber.

In accordance with an embodiment, the suction means 14 are supported by movable supporting means of the suction means 32 which allow said suction means 14 to face said ventilation chamber opening and bring them to a disengagement position which allows said band supporting means 11 to move away from said protective liquid-directing means 13.

In accordance with an embodiment, said movable supporting means of the suction means 32 are adapted to orientate said suction means 14 relative to said braking band 4 and, for example, are operated in an adjustable manner, and preferably, in accordance with an embodiment, are operated in a controlled manner.

In accordance with an embodiment, said movable suction means 14 supporting means are operatively moved through suction means-driving means 33.

In accordance with an embodiment, said driving means are operated in a controlled manner.

In accordance with an embodiment, the liquid-directing means 13 are supported by movable supporting means of the liquid-directing means 34 which allow said liquid-directing means 13 to face said ventilation chamber opening and bringing them to a disengagement position which allows said band supporting means 11 to move away from said protective liquid-directing means 13.

Preferably, in accordance with an embodiment, said band supporting means 11 are operated in a controlled manner.

In accordance with an embodiment, said movable supporting means of the liquid-directing means 34 are adapted to orientate said liquid-directing means 13 relative to said braking band 4.

In accordance with an embodiment, said movable supporting means of the liquid-directing means 13 are operatively moved through driving means of the liquid-directing means 35, for example, a pneumatic piston which moves said means by causing them to slide on a guide secured to the station or apparatus frame.

In accordance with an embodiment, said driving means are operated in a controlled manner.

In accordance with an embodiment, the liquid-directing means 13 comprise an airless gun 36.

In accordance with an embodiment, said airless gun comprises a cylindrical-shaped outflow nozzle 37.

In accordance with an embodiment, the liquid-directing means 13 comprise liquid pressure adjusting means 38.

In accordance with an embodiment, the liquid-directing means 13 comprise means for applying a preset pressure 39 to said liquid.

Advantageously, and in accordance with an embodiment, said means for applying a preset pressure 39 comprise at least one piston pump.

In accordance with an embodiment, the liquid-directing means 13 comprise a liquid tank 39.

In accordance with an embodiment, said liquid is a paint which is capable to form a corrosion protecting layer which is capable of avoiding the oxidation of the ventilation chamber surface 2 also with a saline environment exposure up to 120 hours.

In accordance with an embodiment, said band supporting means are operatively connected to means to rotate the band in an operable and controlled manner.

In accordance with a general embodiment, an automatic system comprises an apparatus for applying a corrosion protecting layer 1 which initially is in liquid form to the surfaces 2 of a ventilation chamber 3 of a braking band 4 of disk brake disc 5 according to any embodiment described above.

In accordance with an embodiment, the system further provides a conveying line 40 of a plurality of said braking band supporting means 11 which runs throughout the system through processing stations thereof in a step-wise motion.

In accordance with an embodiment, controlled moving means 41 for said conveying line 40 are provided.

In accordance with an embodiment, the system further provides a loading station 42 of braking bands 4 on said braking band supporting means 11 provided for on said conveying line 40.

In accordance with an embodiment, the system further provides a proper braking band assembly control station 43 on said line 40.

In accordance with an embodiment, the system further provides a constructive tolerance control station 44 of said braking band 4.

In accordance with an embodiment, the system further provides a control station for the band assembling means on a vehicle 45 of said braking band 4.

In accordance with an embodiment, the system further provides a painting station 46 of all the other surfaces of said braking band 4, in addition to the ventilation chamber thereof.

In accordance with an embodiment, the system further provides a baking or polymerization station 47 of said anticorrosive liquid 1.

In accordance with an embodiment, the system further provides a cooling station 48 for the braking bands or discs.

Methods to apply a corrosion protecting layer 1 which initially is in liquid form to surfaces 2 of a ventilation chamber 3 of a braking band 4 of disk brake disc 5 will be described herein below according to general embodiments.

In accordance with a general embodiment, a method for applying a corrosion protecting layer 1 which initially is in liquid form to surfaces 2 of a ventilation chamber 3 of a braking band 4 of disk brake disc 5, in which
- said braking band 4 comprises two annular plates 6, 7 having a same predefined rotation axis X-X;
- said plates 6, 7 are mutually facing, thus defining said ventilation chamber 3 therebetween, said chamber comprising ventilation chamber surfaces 2 and an inner annular air inlet edge opening 8 facing the rotation axis X-X, and an outer annular air outlet edge opening 9 opposite the air inlet edge opening in the transversal or radial direction relative to the rotation axis X-X;
- said plates (6, 7) are connected to each other by a plurality of connection members 30 defining ventilation ducts 10 which are arranged inside said ventilation chamber and that define said ventilation chamber surface 2;
comprises the steps of:
- supporting said braking band 4 so that it can rotate around said axis X-X;
- rotating said braking band 4 around said axis X-X;
- directing the corrosion protecting liquid 1 through said air outlet edge opening 9 or said air inlet edge opening 8 towards said ventilation chamber;
- applying a suction.

Advantageously, the further steps are provided:
- applying a preset pressure to said corrosion protecting liquid 1, while avoiding admixing the latter with air,
- causing said liquid to pass through an opening having preset small dimensions in order to achieve the separation of said liquid particles, resulting in the atomization thereof;
- providing said suction so as to act through the same edge opening 9 or 8 on which said corrosion protecting liquid enters the ventilation chamber
are provided for.

In accordance with an embodiment, the step of:
- passive collection of the protective liquid 18 flowing out from the air inlet 8 or the air outlet 9 opening which is opposite the protective liquid 1 inlet opening into the ventilation chamber 3.

In accordance with an embodiment, said passive collection of the protective liquid 18 is carried out opposite said inlet of the protective liquid 1 in the ventilation chamber 3.

In accordance with an embodiment, said passive collection takes place facing said air inlet 8 or air outlet 9 opening which is opposite said opening which said protective liquid 1 is introduced through, so as to collect any liquid flowing out from said ventilation chamber 3 and convey it by gravity towards a collection tank 19 for the protective liquid 1.

In accordance with an embodiment, said collection is so extended as to cover a predefined circumferential portion of said facing air inlet 8 or air outlet 9 opening which is opposite said inlet of the protective liquid 13, so as to collect the any protective liquid 1 flowing out from said opening.

In accordance with an embodiment, the passive collection of the protective liquid takes place by bringing passive collection means closer to the opening in an operated manner.

In accordance with an embodiment, said passive collection means are oriented relative to said braking band (4).

In accordance with an embodiment, said passive collection means are operatively moved through driving means 26.

In accordance with an embodiment, said driving means are operated in a controlled manner.

In accordance with an embodiment, the steps of:
- applying at least one air jet 20 through said air inlet 8 or air outlet 9 opening
are further provided.

In accordance with an embodiment, said application of at least one air jet 20 is adjacent to said liquid inlet and faces said air inlet 8 or air outlet 9 opening which said protective liquid is added through, so as to promote the liquid flow inside the ventilation ducts 10.

In accordance with an embodiment, said application of at least one air jet 20 faces said air inlet 8 or air outlet 9 opening which is opposite said protective liquid 1 inlet opening in said ventilation chamber, so as to counter-act the liquid outflowingfrom the ventilation chamber 3 and increase the flow turbulence of said liquid in the ventilation chamber 3.

In accordance with an embodiment, said application of at least one air jet 20 comprises the application of at least two air jets entering said ventilation chamber 3 angularly relative to said axis X-X before and after the opposed liquid inlet in the chamber 13.

In accordance with an embodiment, the application of at least one air jet is activated in a controlled way.

In accordance with an embodiment, said air jet 28 is positioned relative to said braking band 4.

In accordance with an embodiment, the application of at least one air jet is activated in an operated and controlled manner.

In accordance with an embodiment, the application of at least one air jet takes place under a controlled pressure.

In accordance with an embodiment, said suction extends while facing said ventilation chamber opening angularly arranged adjacent to said inlet of said liquid 1 in said ventilation chamber.

In accordance with an embodiment, said suction is generated in an operated manner with at least one suction turbine 24.

In accordance with an embodiment, upstream said suction 22 a separation of the suctioned liquid from air is provided for, and a collection of the liquid for the conveyance thereof to a liquid collection tank 31.

In accordance with an embodiment, the suction is activated in a controlled manner.

In accordance with an embodiment, said suction is activated before the liquid 1 inlet into said ventilation chamber.

In accordance with an embodiment, said suction faces said ventilation chamber opening and facing the protective liquid 1 inlet.

In accordance with an embodiment, said suction is positionable relative to said braking band 4.

In accordance with an embodiment, said suction is operatively moved in an operated manner.

In accordance with an embodiment, said suction is operated in a controlled manner.

In accordance with an embodiment, the liquid 1 inlet into the ventilation chamber is movable from a position facing said ventilation chamber opening to a disengagement position which allows the band supporting means 11 moving away.

In accordance with an embodiment, said movement of the liquid-directing means 34 is adapted to position the liquid 1 inlet relative to said braking band 4.

In accordance with an embodiment, said movement of the liquid-directing means 13 is achieved through driving means of the liquid-directing means 35.

In accordance with an embodiment, driving means are operated in a controlled manner.

In accordance with an embodiment, the liquid 1 inlet in the ventilation chamber 3 takes place by providing an airless mode.

In accordance with an embodiment, said liquid inlet in an airless mode takes place through a cylindrical-shaped outflow nozzle having a diameter which is able to atomize said liquid particles.

In accordance with an embodiment, the inlet of said liquid 1 takes place by adjusting the liquid pressure, preferably in a controlled manner.

In accordance with an embodiment, the inlet of said liquid 1 takes place by applying a predefined adjusted pressure to said liquid.

In accordance with an embodiment, said predefined adjusted pressure is applied without adding pressurized air.

In accordance with an embodiment, the inlet of said liquid 1 takes place by drawing the liquid from a liquid tank 39.

In accordance with an embodiment, in said ventilation chamber 3 a liquid is added comprising paint able to form a corrosion protecting layer capable of avoiding the oxidation of the ventilation chamber 3 surface also up to 120-hours saline environment exposure.

In accordance with a further embodiment, an apparatus for applying a corrosion protecting layer 1 which initially is in liquid form to the surfaces 2 of a ventilation chamber 3 of a braking band 4 of disk brake disc 5, in which
- said braking band 4 comprises two annular plates 6, 7 having the same predefined rotation axis (X-X);
- said plates 6, 7 being mutually facing, thus defining said ventilation chamber 3 therebetween, said chamber comprising ventilation chamber surfaces 2 and an inner annular air inlet edge opening 8 facing the rotation axis X-X, and an outer annular air outlet edge opening 9 opposite the air inlet edge opening in the transversal or radial direction relative to the rotation axis X-X;
- said plates 6, 7 being connected to each other by a plurality of connection members 30 defining ventilation ducts 10 arranged inside said ventilation chamber and defining said ventilation chamber surface 2;
said apparatus comprising:
- supporting means 11 of the braking band 4 for rotating the latter around said axis X-X;
- rotating means 12 of said supporting means 11;
- means to direct the corrosion protecting liquid 13 through said air outlet edge opening 9 or said air inlet edge opening 8 towards said ventilation chamber;
- suction-applying means 14.

Advantageously:
- said means to direct a corrosion protecting liquid 13 to the ventilation chamber 3 comprise means for applying a preset pressure 15 to said liquid before it flows out of said liquid-directing means in the ventilation chamber, and outflowing means 16 of said pressurized liquid comprising a liquid outflow opening 17 that is capable to cause a separation of said liquid particles, thus resulting in the atomization thereof;
- said suction-applying means 14 are arranged so as to act through the same edge opening 9 or 8 which said means act on in order to direct the corrosion protecting liquid to the ventilation chamber.

In accordance with an embodiment, said liquid-directing means in said ventilation chamber comprise cleaning means 49 adapted to remove optional obstructions of the outflow of the means, for example, caused by the solidification of said liquid.

Advantageously, in accordance with an embodiment, all of, or some movements, or inflows, or evacuations of the apparatus and system fluids are pre-arranged in a controlled and preferably programmed manner by means of at least one automatic control unit 50.

A particular embodiment will be described in more detail herein below.

The apparatus, of the "airless" type, allowed applying a painting process which turned out to be resistant to the saline mist chamber of coated ventilated brake discs, at least for 120 hours (the test was carried out according to the specifications of the international standard ASTM B117) .

In the "airless" apparatus, the atomization of the anticorrosive protective paint has been achieved, while avoiding admixing the paint with air. Particularly, this atomization has been achieved through the passage of the high pressure paint through a nozzle having an extremely small diameter and adapted to cause the separation of the paint particles, therefore the atomization thereof.

Such apparatus is completely integrated from the electro-mechanical point of view, and it is controlled through a software managing the whole automatic painting line; therefore, the whole process takes place without any human intervention.

The painting line comprises a chain which, upon moving in a step mode, carries the mandrels, which the discs are located on, towards the paint booth; these, once they have been positioned, are rotated around a vertical axis. Subsequently, they pass through an inductor-equipped station which heats the paint (in order to polymerize it), then they are conveyed to a cooling tunnel.

The painting process is accomplished by means of an airless station which is provided with a paint perfusing nozzle having an extremely small diameter, from which atomized paint exits in a fan pattern which can be oriented around the gun axis, for example, by rotating the nozzle body; also, the gun may be positioned and arranged in the proper manner (according to the ventilation chamber type), thanks to a completely versatile multipurpose bar and joint securing system. Thereby, the optimal orientation of the paint fan pattern can be ensured for any type of ventilation chamber.

In accordance with an embodiment, the nozzle where the paint flows through is cylindrical (and, for example, it does not have the same shape of the disc ventilation chamber) and it is, for example, the same for all the disc types being processes.

The pressure source for the paint is achieved, for example, by means of a pump for "airless" devices, a piston pump, which ensures a paint constant pressure, a pressure which is mechanically adjustable by means of a regulator.

The pressure adjustment allows consequently adjusting the paint outflow speed, therefore the opening degree of the fan.

In order to ensure a constant cleaning of the inner part of the piece during the process, in accordance with an embodiment, a passive collection port or support is located at the end of the ventilation ducts.

The paint which is collected by this support is conveyed to a flexible pipe, which ends in a container.

In order to remove the excess of coating material which remains in the ventilation chamber ducts, a suction port is used which is arranged on the same side of the spraying gun, having a shape which is suitable to the type of disc being processed; the suction is accomplished through a flexible pipe (by means of two turbines, each having 8.5 KW power which, in accordance with an embodiment, operate in a constant manner).

In accordance with an alternative embodiment, the process also provides for the option to keep the coating material inside the ventilation ducts by using low-pressure compressed air.

In accordance with an embodiment, the operative cycle is as follows:
- the mandrel-carrying chain translates, thus positioning the disc in front of the spraying gun;
- the gun, being secured to a pneumatic cylinder, is horizontally advanced, until it is positioned within a few millimetres of the disc outer diameter;

- simultaneously, the collection port which is secured to a second pneumatic cylinder is vertically risen until it is positioned inside the disc within a few millimetres of the end of the ventilation ducts;
- at the same time, the suction port, which is secured to a third pneumatic cylinder, is positioned within a few millimetres of the disc outer diameter;
- in accordance with an embodiment, a programmable control device, for example a PLC of the automatic painting line, controls the opening of the gun electrovalve, then the paint begins to be dispensed for a programmable period of time;
- at the end of the paint dispensing operation, the three cylinders remain in position, and the suction continues throughout the time cycle;
- all three cylinders come back to the rest position;
- the mandrel-carrying chain proceeds to the next station.

In accordance with an embodiment, it is possible to (optionally) program the compressed air outflow in contrast with the paint flow.

Some of the advantages achieved by the proposed solution are summarized herein below:
- thanks to the proposed apparatus, a protection of the ventilation chamber can be achieved which is capable to meet the DIN 50021 standard in the absence of oxidation, by keeping the pieces in saline mist for more than 120 hours;
- the proposed system turns out to be easily implemented and completely automatable;

- dipping the discs in the protective liquid is avoided;
- paint localized build-ups which cause easily delaminating blisters upon polymerization, thus exposing the disc material to oxidation, are avoided;
- the use of a corrosion protecting liquid is minimized;
- due to the turbulent and atomized flow, all the points on the ventilation chamber surface can be reached;
- due to the side-by-side arrangement of the liquid spraying gun and the suction port, a movement of the liquid from the inlet opening to the opposed opening, and a return of the same to the inlet opening for an end suction of the excess amount in the suction port is achieved, thus causing a double passing of the protective liquid on the whole ventilation chamber surface in an even manner;
- the liquid outflowing from the band ventilation chamber is avoided.

It should be understood that the solution will be able to take, in its practical implementation, also shapes and configurations other than the one which has been illustrated above. Furthermore, all the details will be able to be replaced by technically equivalent members, and the shapes, dimensions, and materials employed will be able to be any, according to the needs.

## Claims

1. Apparatus to apply a corrosion protecting layer (1), being initially in liquid form, to the surfaces (2) of a ventilation chamber (3) of a braking band (4) of a disk brake disc (5), wherein
- said braking band (4) comprises two annular plates (6, 7) having the same predefined rotation axis (X-X);
- said plates (6, 7) facing each other, thus defining said ventilation chamber (3) therebetween, said chamber comprising ventilation chamber surfaces (2) and an inner annular air inlet edge opening (8) facing the rotation axis (X-X) and an outer annular air outlet edge opening (9) opposite the air inlet edge opening in the transversal or radial direction relative to the rotation axis (X-X);
- said plates (6, 7) being connected to each other by a plurality of connection members (30) defining ventilation ducts (10) arranged inside said ventilation chamber and defining said ventilation chamber surface (2);
said apparatus comprising:
- supporting means (11) of the braking band (4) for rotating the latter around said axis (X-X);
- rotating means (12) of said supporting means (11);
- corrosion protecting liquid-directing means (13) through said air outlet edge opening (9) or said air inlet edge opening (8) towards said ventilation chamber;
- suction-applying means (14);
**characterized in that**
- said corrosion protecting liquid-directing means (13) in the ventilation chamber (3) comprise means for applying a preset pressure (15) to said liquid before it flows out of said liquid-directing means in the ventilation chamber, and outflowing means (16) of said pressurized liquid comprising a liquid outflow opening (17) that is capable to cause a separation of said liquid particles, thus resulting in the atomization thereof;
- said suction-applying means (14) are arranged so as to act through the same edge opening (9 or 8) which said means act on in order to direct the corrosion protecting liquid to the ventilation chamber.

2. Apparatus (51) according to claim 1, wherein said means for applying a preset pressure (15) to said liquid, avoid admixing said liquid with air, and wherein said liquid outflow opening has predefined small dimensions (17).

3. The apparatus according to claim 2, wherein
- protective liquid passive collection means (18) arranged in the proximity of the air inlet (8) or air outlet (9) opening which is opposite said protective liquid-directing means (13) in the ventilation chamber are further provided.

4. The apparatus according to claim 3, wherein said protective liquid passive collection means (18) are arranged opposite said protective liquid-directing means (13) in the ventilation chamber (3).

5. The apparatus according to any claim 2 to 4, wherein means for applying at least one air jet (20) through said air inlet (8) or air outlet (9) opening are further provided.

6. The apparatus according to claim 5, wherein said means for applying at least one air jet (20) are air jets (27) adjacent to said liquid-directing means and face said air inlet (8) or air outlet (9) opening which said protective liquid-directing means (13) are facing, so as to promote the fluid flow inside the ventilation ducts (10).

7. The apparatus according to claim 2 to 6, wherein said suction-applying means (14) comprise a suction port (22) extending while facing said ventilation chamber opening (3) angularly arranged adjacent to said liquid-directing means (13) in said ventilation chamber.

8. The apparatus according to claim 2 to 7, wherein the suction of said suction means is activated in a controlled manner.

9. The apparatus according to claim 2 to 8, wherein liquid-directing means (13) comprise an airless gun (36) comprising a cylindrical-shaped outflow nozzle (37).

10. Automatic system comprising an apparatus according to any claim 2 to 9 for applying a corrosion protecting layer (1) which initially is in liquid form to the surfaces (2) of a ventilation chamber (3) of a braking band (4) of a disk brake disc (5).

11. The system according to claim 10, wherein a conveying line (40) of a plurality of said braking band supporting means (11) is further provided which runs throughout the system through processing stations thereof in a step-wise motion.

12. Method for applying a corrosion protecting layer (1), which is initially in liquid form, to surfaces (2) of a ventilation chamber (3) of a braking band (4) of a disk brake disc (5), wherein
- said braking band (4) comprises two annular plates (6, 7) having the same predefined rotation axis (X-X);
- said plates (6, 7) being mutually facing, thus defining said ventilation chamber (3) therebetween, said chamber comprising ventilation chamber surfaces (2) and an inner annular air inlet edge opening (8) facing the rotation axis (X-X) and an outer annular air outlet edge opening (9) opposite the air inlet edge opening in the transversal or radial direction relative to the rotation axis (X-X);
- said plates (6, 7) being connected to each other by a plurality of connection members (30) defining ventilation ducts (10) arranged inside said ventilation chamber and defining said ventilation chamber surface (2);
said method comprises the steps of:
- supporting said braking band (4) so that it can rotate around said axis (X-X);
- rotating said braking band (4) around said axis (X-X);
- directing the corrosion protecting liquid (13) through said air outlet edge opening (9) or said air inlet edge opening (8) towards said ventilation chamber;
- applying a suction;
**characterized in that**
- a preset pressure (15) is applied to said corrosion protecting liquid (13), while avoiding admixing the latter with air, by causing said liquid to flow through an opening having preset small dimensions in order to achieve the separation of said liquid particles, resulting in the atomization thereof;
- said suction is so arranged as to act through the same edge opening (9 or 8) on which said corrosion protecting liquid enters the ventilation chamber.

13. The method according to claim 12, wherein the step is further provided of
- passive collection of the protective liquid (18) flowing out from the air inlet (8) or air outlet (9) opening which is opposite the protective liquid (13) inlet opening in the ventilation chamber (3).

14. The method according to claim 13, wherein said passive collection of the protective liquid (18) is carried out opposite said inlet of the protective liquid (13) in the ventilation chamber (3).

15. The method according to any claim 12 to 14, wherein the steps are further provided of:
- applying at least one air jet (20) through said air inlet (8) or air outlet (9) opening wherein said application of at least one air jet (20) is adjacent to said liquid inlet and faces said air inlet (8) or air outlet (9) opening which said protective liquid is added through, so as to promote the liquid flow inside the ventilation ducts (10).

16. The method according to any claim 12 to 15, wherein said suction extends while facing said ventilation chamber opening that is angularly arranged adjacent to said inlet of said liquid (1) in said ventilation chamber.

17. The method according to any claim 12 to 16, wherein the liquid (1) inlet in the ventilation chamber (3) takes place by providing an airless mode wherein said liquid inlet in an airless mode takes place through a cylindrical-shaped outflow nozzle having a diameter which is capable of atomizing said liquid particles.

18. The method according to any claim 12 to 16, wherein the inlet of said liquid (1) takes place by adjusting the liquid pressure in a controlled manner.

## Patentansprüche

1. Vorrichtung, um eine Korrosionsschutzschicht (1), welche anfänglich in flüssiger Form vorliegt, auf die Flächen (2) einer Belüftungskammer (3) eines Bremsbandes (4) einer Scheibenbremsenscheibe (5) zu applizieren, wobei
- das Bremsband (4) zwei ringförmige Platten (6, 7) umfasst, welche die gleiche vordefinierte Rotationsachse (X-X) aufweisen;
- die Platten (6, 7) zu einander weisen, wodurch sie dazwischen die Belüftungskammer (3) definieren, wobei die Kammer Belüftungskammerflächen (2) und eine innere ringförmige Lufteinlass-Randöffnung (8), welche zu der Rotationsachse (X-X) weist, und eine äußere ringförmige Luftauslass-Randöffnung (9) aufweist, welche der Lufteinlass-Randöffnung in der transversalen oder radialen Richtung relativ zu der Rotationsachse (X-X) entgegengesetzt ist;
- die Platten (6, 7) miteinander durch eine Mehrzahl von Verbindungselementen (30) verbunden sind, welche Belüftungsleitungen (10) definieren, welche in der Belüftungskammer angeordnet sind und die Belüftungskammerfläche (2) definieren; wobei die Vorrichtung umfasst:
- Halterungsmittel (11) des Bremsbandes (4) zum Rotieren des letzteren um die Achse (X-X);
- Rotationsmittel (12) der Halterungsmittel (11);
- Korrosionsschutzflüssigkeit-Richtmittel (13) durch die Luftauslass-Randöffnung (9) oder die Lufteinlass-Randöffnung (8) in Richtung der Belüftungskammer;
- Saug-Applikationsmittel (14);
**dadurch gekennzeichnet, dass**
- die Korrosionsschutzflüssigkeit-Richtmittel (13) in der Belüftungskammer (3) Mittel zum Applizieren eines voreingestellten Drucks (15) auf die Flüssigkeit, bevor sie aus den Flüssigkeit-Richtmitteln in die Belüftungskammer strömt, und Ausströmungsmittel (16) der unter Druck versetzten Flüssigkeit umfassen, umfassend eine Flüssigkeit-Ausströmungsöffnung (17), welche in der Lage ist, eine Trennung der Flüssigkeitspartikel hervorzurufen, wodurch die Zerstäubung davon erreicht wird;
- die Saug-Applikationsmittel (14) angeordnet sind, um durch die gleiche Randöffnung (9 oder 8) zu wirken, wobei diese Mittel wirken, um die Korrosionsschutzflüssigkeit auf die Belüftungskammer zu richten.

2. Vorrichtung (51) nach Anspruch 1, wobei die Mittel zum Applizieren eines voreingestellten Drucks (15) auf die Flüssigkeit ein Vermischen der Flüssigkeit mit Luft vermeiden, und wobei die Flüssigkeit-Ausströmungsöffnung vordefinierte kleine Abmessungen (17) aufweist.

3. Vorrichtung nach Anspruch 2, wobei
- passive Schutzflüssigkeit-Sammelmittel (18), welche in der Nähe der Lufteinlass- (8) oder der Luftauslass- (9) Öffnung angeordnet sind, welche den Schutzflüssigkeit-Richtmitteln (13) in der Belüftungskammer entgegengesetzt sind, ferner bereitgestellt sind.

4. Vorrichtung nach Anspruch 3, wobei die passiven Schutz-Flüssigkeit-Sammelmittel (18) den Schutzflüssigkeit-Richtmitteln (13) in der Belüftungskammer (3) entgegengesetzt angeordnet sind.

5. Vorrichtung nach einem der Ansprüche 2 bis 4, wobei Mittel zum Applizieren wenigstens eines Luftstrahls (20) durch die Lufteinlass- (8) oder die Luftauslass- (9) Öffnung ferner bereitgestellt sind.

6. Vorrichtung nach Anspruch 5, wobei die Mittel zum Applizieren wenigstens eines Luftstrahls (20) Luftstrahlen (27) sind, welche den Flüssigkeit-Richtmitteln benachbart sind und zu der Lufteinlass- (8) oder der Luftauslass- (9) Öffnung weisen, zu welcher die Schutzflüssigkeit-Richtmittel (13) weisen, um den Fluidstrom innerhalb der Belüftungsleitungen (10) zu fördern.

7. Vorrichtung nach Anspruch 2 bis 6, wobei die Saug-Applikationsmittel (14) einen Sauganschluss (22) umfassen, welcher sich, während er zu der Belüftungskammer-Öffnung (3) weist, erstreckt, welche den Flüssigkeit-Richtmitteln (13) benachbart in der Belüftungskammer schräg angeordnet ist.

8. Vorrichtung nach Anspruch 2 bis 7, wobei das Saugen der Saugmittel in einer geregelten Weise aktiviert wird.

9. Vorrichtung nach Anspruch 2 bis 8, wobei Flüssigkeit-Richtmittel (13) eine luftfreie Pistole (36) umfassen, umfassend eine zylindrisch geformte Ausströmungsdüse (37).

10. Automatisches System, umfassend eine Vorrichtung nach einem der Ansprüche 2 bis 9 zum Applizieren einer Korrosionsschutzschicht (1), welche anfänglich in flüssiger Form vorliegt, auf die Flächen (2) einer Belüftungskammer (3) eines Bremsbandes (4) einer Scheibenbremsenscheibe (5).

11. System nach Anspruch 10, wobei eine Förderlinie (40) einer Mehrzahl der Bremsband-Halterungsmittel (11) ferner bereitgestellt ist, welche durch das System durch Verarbeitungsstationen davon in einer schrittweisen Bewegung verläuft.

12. Verfahren zum Applizieren einer Korrosionsschutzschicht (1), welche anfänglich in flüssiger Form vorliegt, auf Flächen (2) einer Belüftungskammer (3) eines Bremsbandes (4) einer Scheibenbremsenscheibe (5), wobei
- das Bremsband (4) zwei ringförmige Platten (6, 7) umfasst, welche die gleiche vordefinierte Rotationsachse (X-X) aufweisen;
- die Platten (6, 7) zu einander weisen, wodurch sie dazwischen die Belüftungskammer (3) definieren, wobei die Kammer Belüftungskammerflächen (2) und eine innere ringförmige Lufteinlass-Randöffnung (8), welche zu der Rotationsachse (X-X) weist, und eine äußere ringförmige Luftauslass-Randöffnung (9) aufweist, welche der Lufteinlass-Randöffnung in der transversalen oder radialen Richtung relativ zu der Rotationsachse (X-X) entgegengesetzt ist;
- die Platten (6, 7) miteinander durch eine Mehrzahl von Verbindungselementen (30) verbunden sind, welche Belüftungsleitungen (10) definieren, welche in der Belüftungskammer angeordnet sind und die Belüftungskammerfläche (2) definieren; wobei das Verfahren die Schritte umfasst:
- Haltern des Bremsbandes (4), so dass es um die Achse (X-X) rotieren kann;
- Rotieren des Bremsbandes (4) um die Achse (X-X);
- Richten der Korrosionsschutzflüssigkeit (13) durch die Luftauslass-Randöffnung (9) oder die Lufteinlass-Randöffnung (8) in Richtung der Belüftungskammer;
- Applizieren eines Saugens;
**dadurch gekennzeichnet, dass**
ein voreingestellter Druck (15) auf die Korrosionsschutzflüssigkeit (13) appliziert wird, während ein Durchmischen der letzteren mit Luft dadurch verhindert wird, dass die Flüssigkeit veranlasst wird, durch eine Öffnung mit voreingestellten kleinen Abmessungen zu strömen, um die Trennung der flüssigen Partikel zu erreichen, was in der Zerstäubung davon resultiert;
- das Saugen so eingerichtet ist, dass es durch die gleiche Randöffnung (9 oder 8) wirkt, an welcher die Korrosionsschutzflüssigkeit in die Belüftungskammer eintritt.

13. Verfahren nach Anspruch 12, wobei der Schritt ferner bereitgestellt ist
- eines passiven Sammelns der Schutzflüssigkeit (18), welche aus der Lufteinlass- (8) oder der Luftauslass- (9) Öffnung ausströmt, welche der Schutzflüssigkeit- (13) Einlassöffnung in der Belüftungskammer (3) entgegengesetzt ist.

14. Verfahren nach Anspruch 13, wobei das passive Sammeln der Schutzflüssigkeit (18) dem Einlass der Schutzflüssigkeit (13) in die Belüftungskammer (3) entgegengesetzt ausgeführt wird.

15. Verfahren nach einem der Ansprüche 12 bis 14, wobei die Schritte ferner bereitgestellt sind:
- Applizieren wenigstens eines Luftstrahls (20) durch die Lufteinlass-(8) oder die Luftauslass- (9) Öffnung, wobei die Applikation wenigstens eines Luftstrahls (20) dem Flüssigkeits-Einlass benachbart ist und zu der Lufteinlass- (8) oder der Luftauslass- (9) Öffnung weist, durch welche die Schutzflüssigkeit hinzugefügt wird, um den Flüssigkeitsstrom in den Lüftungsleitungen (10) zu fördern.

16. Verfahren nach einem der Ansprüche 12 bis 15, wobei sich das Saugen, während es zu der Belüftungskammer-Öffnung weist, erstreckt, welche dem Einlass der Flüssigkeit (1) in die Belüftungskammer benachbart schräg angeordnet ist.

17. Verfahren nach einem der Ansprüche 12 bis 16, wobei der Flüssigkeits-(1) Einlass in die Belüftungskammer (3) durch Bereitstellen eines luftfreien Modus stattfindet, wobei der Flüssigkeits-Einlass in einem luftfreien Modus durch eine zylindrisch geformte Ausströmungsdüse mit einem Durchmesser stattfindet, welcher in der Lage ist, die flüssigen Partikel zu zerstäuben.

18. Verfahren nach einem der Ansprüche 12 bis 16, wobei der Einlass der Flüssigkeit (1) durch Einstellen des Flüssigkeitsdrucks in einer geregelten Weise stattfindet.

## Revendications

1. Appareil pour appliquer une couche de protection contre la corrosion (1), initialement sous forme liquide, sur les surfaces (2) d'une chambre de ventilation (3) d'une bande de freinage (4) d'un disque de frein à disque (5), dans lequel
- ladite bande de freinage (4) comprend deux plaques annulaires (6, 7) ayant le même axe de rotation prédéfini (X-X) ;
- lesdites plaques (6, 7) se faisant face, définissant ainsi ladite chambre de ventilation (3) entre elles, ladite chambre comprenant des surfaces de chambre de ventilation (2) et une ouverture de bord d'entrée d'air annulaire intérieure (8) faisant face à l'axe de rotation (X-X) et une ouverture de bord de sortie d'air annulaire extérieure (9) opposée à l'ouverture de bord d'entrée d'air dans la direction transversale ou radiale par rapport à l'axe de rotation (X-X) ;
- lesdites plaques (6, 7) étant reliées l'une à l'autre par une pluralité d'éléments de liaison (30) définissant des conduits de ventilation (10) agencés à l'intérieur de ladite chambre de ventilation et définissant ladite surface de chambre de ventilation (2) ;
ledit appareil comprenant :
- des moyens de support (11) de la bande de freinage (4) pour faire tourner cette dernière autour dudit axe (X-X) ;
- des moyens de rotation (12) desdits moyens de support (11) ;
- des moyens d'orientation de liquide de protection contre la corrosion (13) à travers ladite ouverture de bord de sortie d'air (9) ou ladite ouverture de bord d'entrée d'air (8) vers ladite chambre de ventilation ;
- des moyens d'application d'aspiration (14) ;
**caractérisé en ce que**
- lesdits moyens d'orientation de liquide de protection contre la corrosion (13) dans la chambre de ventilation (3) comprennent des moyens d'application d'une pression préréglée (15) audit liquide avant qu'il s'écoule hors desdits moyens d'orientation de liquide dans la chambre de ventilation, et des moyens d'écoulement (16) dudit liquide sous pression comprenant une ouverture de sortie de liquide (17) qui est capable de provoquer une séparation desdites particules de liquide, entraînant ainsi l'atomisation de celui-ci ;
- lesdits moyens d'application d'aspiration (14) sont agencés de façon à agir à travers la même ouverture de bord (9 ou 8) sur laquelle lesdits moyens agissent pour orienter le liquide de protection contre la corrosion vers la chambre de ventilation.

2. Appareil (51) selon la revendication 1, dans lequel lesdits moyens d'application d'une pression préréglée (15) audit liquide, évitent un mélange dudit liquide avec l'air, et dans lequel ladite ouverture de sortie de liquide a de petites dimensions prédéfinies (17).

3. Appareil selon la revendication 2, dans lequel
- des moyens de collecte passive de liquide de protection (18) agencés à proximité de l'ouverture d'entrée d'air (8) ou de sortie d'air (9) qui est opposée auxdits moyens d'orientation de liquide de protection (13) dans la chambre de ventilation sont prévus en outre.

4. Appareil selon la revendication 3, dans lequel lesdits moyens de collecte passive de liquide de protection (18) sont agencés à l'opposé desdits moyens d'orientation de liquide de protection (13) dans la chambre de ventilation (3).

5. Appareil selon une quelconque revendication 2 à 4, dans lequel des moyens d'application d'au moins un jet d'air (20) à travers ladite ouverture d'entrée d'air (8) ou de sortie d'air (9) sont prévus en outre.

6. Appareil selon la revendication 5, dans lequel lesdits moyens d'application d'au moins un jet d'air (20) sont des jets d'air (27) adjacents auxdits moyens d'orientation de liquide et font face à ladite ouverture d'entrée d'air (8) ou de sortie d'air (9) à laquelle lesdits moyens d'orientation de liquide de protection (13) font face, de façon à promouvoir l'écoulement de fluide à l'intérieur des conduits de ventilation (10).

7. Appareil selon la revendication 2 à 6, dans lequel lesdits moyens d'application d'aspiration (14) comprennent un orifice d'aspiration (22) s'étendant tout en faisant face à ladite ouverture de chambre de ventilation (3) agencée angulairement adjacente auxdits moyens d'orientation de liquide (13) dans ladite chambre de ventilation.

8. Appareil selon la revendication 2 à 7, dans lequel l'aspiration desdits moyens d'aspiration est activée de manière contrôlée.

9. Appareil selon la revendication 2 à 8, dans lequel des moyens d'orientation de liquide (13) comprennent un pistolet sans air (36) comprenant une buse de sortie de forme cylindrique (37).

10. Système automatique comprenant un appareil selon une quelconque revendication 2 à 9 pour appliquer une couche de protection contre la corrosion (1) qui est initialement sous forme liquide sur les surfaces (2) d'une chambre de ventilation (3) d'une bande de freinage (4) d'un disque de frein à disque (5).

11. Système selon la revendication 10, dans lequel une ligne de transport (40) d'une pluralité desdits moyens de support de bande de freinage (11) est prévue en outre qui s'étend à travers le système à travers des stations de traitement de celui-ci dans un mouvement pas à pas.

12. Procédé pour appliquer une couche de protection contre la corrosion (1), qui est initialement sous forme liquide, sur des surfaces (2) d'une chambre de ventilation (3) d'une bande de freinage (4) d'un disque de frein à disque (5), dans lequel
- ladite bande de freinage (4) comprend deux plaques annulaires (6, 7) ayant le même axe de rotation prédéfini (X-X) ;
- lesdites plaques (6, 7) se faisant mutuellement face, définissant ainsi ladite chambre de ventilation (3) entre elles, ladite chambre comprenant des surfaces de chambre de ventilation (2) et une ouverture de bord d'entrée d'air annulaire intérieure (8) faisant face à l'axe de rotation (X-X) et une ouverture de bord de sortie d'air annulaire extérieure (9) opposée à l'ouverture de bord d'entrée d'air dans la direction transversale ou radiale par rapport à l'axe de rotation (X-X) ;
- lesdites plaques (6, 7) étant reliées l'une à l'autre par une pluralité d'éléments de liaison (30) définissant des conduits de ventilation (10) agencés à l'intérieur de ladite chambre de ventilation et définissant ladite surface de chambre de ventilation (2) ;
ledit procédé comprend les étapes de :
- support de ladite bande de freinage (4) de sorte qu'elle puisse tourner autour dudit axe (X-X) ;
- rotation de ladite bande de freinage (4) autour dudit axe (X-X) ;
- orientation du liquide de protection contre la corrosion (13) à travers ladite ouverture de bord de sortie d'air (9) ou ladite ouverture de bord d'entrée d'air (8) vers ladite chambre de ventilation ;
- application d'une aspiration ;
**caractérisé en ce que**
- une pression préréglée (15) est appliquée audit liquide de protection contre la corrosion (13), tout en évitant un mélange de ce dernier avec l'air, en amenant ledit liquide à s'écouler à travers une ouverture ayant de petites dimensions préréglées afin d'obtenir la séparation desdites particules de liquide, entraînant l'atomisation de celui-ci ;
- ladite aspiration est agencée de façon à agir à travers la même ouverture de bord (9 ou 8) sur laquelle ledit liquide de protection contre la corrosion entre dans la chambre de ventilation.

13. Procédé selon la revendication 12, dans lequel l'étape est prévue en outre de
- collecte passive du liquide de protection (18) s'écoulant hors de l'ouverture d'entrée d'air (8) ou de sortie d'air (9) qui est opposée à l'ouverture d'entrée de liquide de protection (13) dans la chambre de ventilation (3).

14. Procédé selon la revendication 13, dans lequel ladite collecte passive du liquide de protection (18) est effectuée à l'opposé de ladite entrée du liquide de protection (13) dans la chambre de ventilation (3).

15. Procédé selon une quelconque revendication 12 à 14, dans lequel les étapes sont prévues en outre de :
- application d'au moins un jet d'air (20) à travers ladite ouverture d'entrée d'air (8) ou de sortie d'air (9) dans lequel ladite application d'au moins un jet d'air (20) est adjacente à ladite entrée de liquide et fait face à ladite ouverture d'entrée d'air (8) ou de sortie d'air (9) à travers laquelle ledit liquide de protection est ajouté, de façon à promouvoir l'écoulement de liquide à l'intérieur des conduits de ventilation (10).

16. Procédé selon une quelconque revendication 12 à 15, dans lequel ladite aspiration s'étend tout en faisant face à ladite ouverture de chambre de ventilation qui est agencée angulairement adjacente à ladite entrée dudit liquide (1) dans ladite chambre de ventilation.

17. Procédé selon une quelconque revendication 12 à 16, dans lequel l'entrée de liquide (1) dans la chambre de ventilation (3) a lieu par fourniture d'un mode sans air dans lequel l'entrée de liquide dans un mode sans air a lieu à travers une buse de sortie de forme cylindrique ayant un diamètre qui est capable d'atomiser lesdites particules de liquide.

18. Procédé selon une quelconque revendication 12 à 16, dans lequel l'entrée dudit liquide (1) a lieu par réglage de la pression de liquide de manière contrôlée.
